# EUROPEAN PATENT APPLICATION

(11) **EP 4 618 383 A1**
(43) Date of publication of application: **17.09.2025**
(21) Application number: 25162526.5
(22) Date of filing: 10.03.2025
(51) Int. Cl.: H02K 15/095

(54) **WINDING DEVICE AND WINDING METHOD**

(30) Priority: 12.03.2024 JP 2024037777
(71) Applicant: Mitsuba Corporation, Kiryu-shi, Gunma 376-8555 (JP)
(72) Inventor: FUKUSHIMA, YUSUKE, Kiryu-shi, Gunma, 3768555 (JP); OHKAWARA, TOMOKI, Kiryu-shi, Gunma, 3768555 (JP); ISHIDA, TAKAHITO, Kiryu-shi, Gunma, 3768555 (JP); SUGIYAMA, MASAYUKI, Kiryu-shi, Gunma, 3768555 (JP)
(74) Representative: Becker Kurig & Partner Patentanwälte mbB

(57) **Abstract**

A winding device (10) includes: a wire supply part (11) that supplies a wire in a round shape; a shaping part (12) that is provided downstream of the wire supply part (11) and shapes the wire into a rectangular shape; and a winding part (14) that is provided downstream of the shaping part (12) and winds the wire on a winding target. The shaping part (12) performs: a start-finish end processing of not shaping a portion of the wire corresponding to a start-finish end of the winding target; and a shaping processing of performing shaping on the wire corresponding to a portion to be wound on the winding target. The start-finish end processing is performed when a supply length of the wire supplied after performing the winding for a predetermined count on the winding target reaches a predetermined length.

## Description

### [Technical Field]

The present invention relates to a winding device and a winding method.

### [Background Art]

In the case of shaping a round wire into a rectangular wire by a rectangular wire shaping device and winding the shaped rectangular wire on a teeth part of a split core, there is a possibility that the wire may be damaged when changing the cross-sectional shape of the wire.

Thus, as an objective, Patent Document 1 discloses providing a winding device capable of suppressing quality deterioration of products due to damage to the wire, even in the case of winding on a winding target after deforming the cross-sectional shape of the wire midway.

Specifically, it is disclosed that the winding device is a winding device supplying a wire from a wire supply source to a winding target side and winds on the winding target, and is characterized by including a wire deformation part that is disposed on the downstream side of the wire supply source and changes the cross-sectional shape of the wire, and a damage detection part that is disposed on the downstream side of the wire deformation part and detects damage to the wire.

### [Prior Art Documents]

### [Patent Documents]

[Patent Document 1] Japanese Patent Application Laid-Open No. 2023-132628

### SUMMARY OF INVENTION

### [Problem to Be Solved by Invention]

In addition, in a winding target such as a split stator core, both ends (also referred to as start-finish ends) of the coil wire to be wound become lead portions for connection. For this reason, it is preferable that the start-finish ends of the wire wound on the winding target remain in a round shape which facilitates the connection work performed after the winding.

To form such start-finish ends that remain in a round shape, the wire portion corresponding to the start-finish ends is kept in a round shape without performing shaping, and shaping is performed on a following portion to be wound on the winding target into a rectangular shape.

Specifically, a short length portion serving as an initial start end is kept as a wire in a round shape, followed by shaping a rectangular shape to be wound. The wire in a round shape of the start end is not wound on the winding target, and the portion in a rectangular shape is wound.

Then, at a wire portion (also referred to as a start-finish end portion) of a short length corresponding to a finish end portion for the current winding target and a start end portion of a next winding target, again, shaping is not performed, and the wire is kept in a round shape. Subsequently, shaping of the rectangular shape is performed corresponding to the portion to be wound, and further, the wire portion of a short length that is to be taken as the start-finish end portion is not shaped. The above flow is repeated.

In other words, regarding the shaping of the wire, shaping is performed such that there are repetitions of a portion of a short length that is not shaped, followed by a portion of a long length shaped into a rectangular shape.

Then, upon reaching the finish end of the current winding target, the start-finish end portion is cut to separate into a finish end portion and a start end portion. The portion from the start end portion onward becomes the wire for the next winding target, and the winding work is continuously performed with the above repeated.

In addition, the split stator core, which is the winding target, naturally has shape variations within the range of manufacturing tolerances. In other words, the outer shape of the portion to be wound may be smaller or larger, and the variation in the outer shape manifests as a difference in the length of the wire required in winding the wire for the same winding count.

Accordingly, even if the winding count for the winding target is the same, variations occur in the required length of the wire to be wound. When controlling the position to shape the start-finish ends based on the supply length of the wire supplied from start of winding, there are cases where the start-finish ends cannot be formed at an appropriate position due to the influence of variations in the required length of the required wire to be actually wound.

Specifically, in the case where the winding target to be wound is larger than a design outer shape of the winding target, the wire will be wound longer than a design winding length.

Then, if the start-finish end portion is formed at a design length position, since the wire is actually wound longer than designed, the start-finish end portion ends up being wound on the winding target. Furthermore, the shaped portion to be wound on the next winding target will be located at a position at which the start-finish end portion is originally to be located.

When the above occurs, not only does it cause winding collapse due to the wire in a round shape located within the winding portion, but since the shaped portion in a rectangular shape is located at the portion that should be the finish end, there is a problem of increased defect rate in a subsequent connection process.

The present invention has been made in view of such circumstances, and an objective thereof is to provide a winding device and a winding method that are less susceptible to the influence of manufacturing variations of a winding target and are capable of shaping start-finish ends at appropriate positions.

### [Means for Solving Problem]

To achieve the above objective, the present invention is realized by the following configurations. A winding device of the present invention is a winding device winding a wire on a winding target. The winding device includes: a wire supply part that supplies the wire in a round shape; a shaping part that is provided on a downstream side of the wire supply part and shapes the wire into a rectangular shape; and a winding part that is provided on a downstream side of the shaping part and winds the wire on the winding target. The shaping part performs: a start-finish end processing of not performing shaping on a portion of the wire corresponding to a start-finish end of the winding target; and a shaping processing of performing shaping on the wire corresponding to a portion to be wound on the winding target. The start-finish end processing is performed when a supply length of the wire supplied after performing the winding for a predetermined count on the winding target reaches a predetermined length.

A winding method of the present invention is a winding method of winding a wire on a winding target. The winding method includes: a start-finish end step of keeping, in a round shape, a portion of the wire corresponding to a start-finish end of the winding target without performing shaping; and a shaping step of performing shaping on the wire corresponding to a portion to be wound on the winding target into a rectangular shape. The start-finish end step is performed when a supply length of the wire supplied after performing winding for a predetermined count on the winding target reaches a predetermined length.

### [Effects of Invention]

According to the present invention, it is possible to provide a winding device and a winding method that are less susceptible to the influence of manufacturing variations in a winding target and are capable of shaping start-finish ends at appropriate positions.

### BRIEF DESCRIPTION OF DRAWINGS

FIG. 1 is a perspective view of a brushless motor having split cores suitably applicable to a winding device of a first embodiment related to the present invention.
FIG. 2 is a side view of a portion corresponding to one split core of the first embodiment related to the present invention.
FIG. 3 is a top view for describing the winding device of the first embodiment related to the present invention.
FIG. 4 is a view for describing a shaping action in a shaping part of the first embodiment related to the present invention.
FIG. 5 is a side view showing a portion of an encoder of the first embodiment related to the present invention as viewed from the lateral side.
FIG. 6 is a view describing the content of correction performed by a length correction part of a second embodiment related to the present invention.

### EMBODIMENTS FOR IMPLEMENTING INVENTION

Hereinafter, embodiments for implementing the present invention (hereinafter referred to as "embodiments") will be described in detail with reference to the attached drawings. Throughout the description of the embodiments, the same elements will be labeled with the same numbers or symbols.

### (First embodiment)

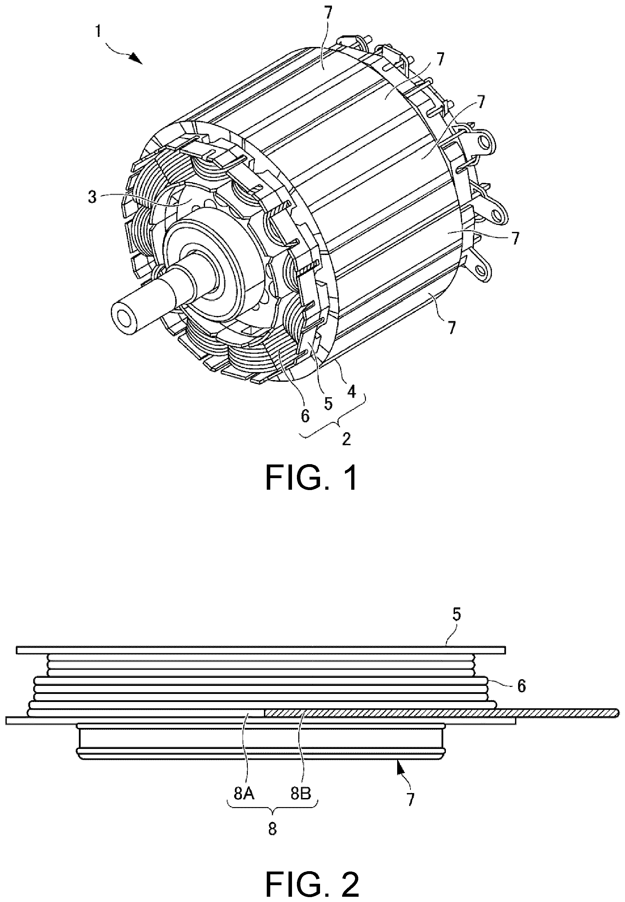

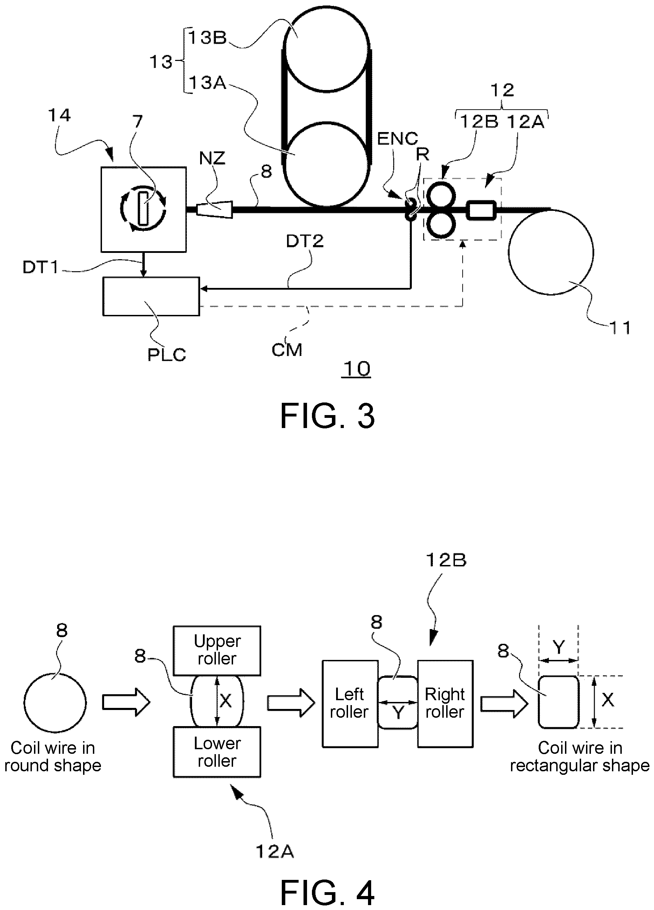

FIG. 1 is a perspective view of a brushless motor 1 having split cores 7 suitably applicable to a winding device 10 (see FIG. 3) of a first embodiment related to the present invention. FIG. 2 is a side view of a portion corresponding to one split core 7 of the first embodiment related to the present invention.

As shown in FIG. 1, for example, the brushless motor 1 (also simply referred to as a motor) includes a stator 2 press-fitted into a housing (not shown), and a rotor 3 disposed on a radially inner side of the stator 2 to be provided rotatably with respect to the stator 2.

The stator 2 includes a stator core 4, an insulator 5 having insulating properties mounted to the stator core 4, and a coil 6.

The stator core 4 is a split core type stator core 4 formed by annularly connecting multiple split cores 7 (an example of a winding target of the present invention) split in the circumferential direction.

As shown in FIG. 2, a coil wire 8 (an example of a wire of the present invention) is wound on the split core 7 to form the coil 6. The coil wire 8 of a portion 8A wound on the split core 7 is in a rectangular shape so as to be wound as tightly as possible without gaps, increase density, and improve performance of the motor.

In contrast, the coil wire 8 of a portion 8B (hereinafter also referred to as a start end, a finish end, or collectively as start-finish ends) drawn out from the split core 7 is a coil wire 8 in a round shape to thus reduce occurrence of defects during a connection work of welding to a bus bar or the like. Since FIG. 2 is a side view, only the finish end of the start-finish ends is depicted, and the start end overlapping in the depth direction of the paper sheet is not visible.

The winding device 10 of this embodiment is a device suitable for winding on the split core 7 while shaping the portion to be wound into a rectangular shape and keeping the start-finish ends in a round shape. This will be described below with reference to FIG. 3 to FIG. 5.

FIG. 3 is a top view for describing the winding device 10 of the first embodiment related to the present invention. As shown in FIG. 3, the winding device 10 of this embodiment includes a wire supply part 11 that supplies the coil wire 8 in a round shape, a shaping part 12 that is provided on the downstream side of the wire supply part 11 to shape the coil wire 8 into a rectangular shape, a tension adjustment part 13 that is provided on the downstream side of the shaping part 12 to control the tension during winding, and a winding part 14 that is provided on the downstream side of the shaping part 12 (more specifically, the tension adjustment part 13) to wind the coil wire 8 on the split core 7.

The upstream side (upstream) refers to the wire supply part 11 side on which supply of the coil wire 8 starts, and the downstream side (downstream) refers to the winding part 14 side, which is the opposite side thereto. Such meanings will also apply hereinafter.

In addition, the winding device 10 of this embodiment includes an encoder ENC (an example of a supply length measurement part of the present invention) that is provided between the shaping part 12 and the winding part 14 (more specifically, between the shaping part 12 and the tension adjustment part 13) to measure a supply length of the supplied coil wire 8, a control part PLC that is responsible for overall control on the winding device 10, and a nozzle NZ that is provided between the tension adjustment part 13 and the winding part 14 to supply the coil wire 8 to the winding part 14.

The wire supply part 11 is a reel on which a so-called magnet wire in a round shape serving as the coil wire 8 is wound.

The shaping part 12 includes a first shaping part 12A having a pair of shaping rollers that sandwiches and shapes the coil wire 8 from a first direction (up-down direction) perpendicular to the coil wire 8 (in the figure, only the shaping roller located on the upper side is visible), and a second shaping part 12B having a pair of shaping rollers that sandwiches and shapes the coil wire 8 from a second direction (left-right direction) perpendicular to the coil wire 8 and the first direction.

FIG. 4 is a view for describing a shaping action in the shaping part 12 of the first embodiment related to the present invention, illustrating upstream toward downstream from the left side to the right side. As shown in FIG. 4, the coil wire 8 supplied from the wire supply part 11 is a coil wire 8 in a round shape.

Then, when the coil wire 8 passes through the first shaping part 12A of a width restricted by the upper roller and the lower roller, the coil wire 8 is shaped to have a width X in the up-down direction. Furthermore, when the coil wire 8 passes through the second shaping part 12B of a width restricted by the left roller and the right roller, the coil wire 8 is shaped to have a width Y in the left-right direction. By passing through the shaping part 12, as shown on the right side, the coil wire 8 is shaped into a coil wire 8 in a rectangular shape with a width X in the up-down direction and a width Y in the left-right direction.

The upper roller and the lower roller are movable by a drive mechanism (not shown) in an approaching direction and a separating direction with respect to each other, and a separation distance between the upper roller and the lower roller is changeable. Similarly, the left roller and the right roller are also movable by a drive mechanism (not shown) in an approaching direction and a separating direction with respect to each other, and a separation distance between the left roller and the right roller is changeable.

Accordingly, with the drive mechanism (not shown) driving to widen the separation distance between the upper roller and the lower roller and the separation distance between the left roller and the right roller such that shaping is not performed on the coil wire 8 corresponding to the start-finish end portion, the coil wire 8 in a round shape supplied from the wire supply part 11 directly passes through without shaping and is taken as the start-finish end portion in the state of the coil wire 8 in a round shape.

As shown in FIG. 3, the tension adjustment part 13 includes tension rollers (first tension roller 13A and second tension roller 13B) and a motor (not shown) rotating the tension rollers.

In this embodiment, the tension rollers (first tension roller 13A and second tension roller 13B) are configured to have a high gripping force to pull out the coil wire 8 from the shaping part 12 without slippage occurring between the tension rollers and the coil wire 8.

Specifically, the diameter of the tension rollers (first tension roller 13A and second tension roller 13B) is configured to be 150 mm ϕ to increase the contact area with the coil wire 8, and at least the portion in contact with the coil wire 8 is composed of a natural rubber material (component) equivalent to a Shore hardness of A90 having a high frictional resistance. Since more space will be required if the diameter is too large, the diameter may be configured to be, for example, 140 mm ϕ or more and 200 mm ϕ or less.

Although not shown in the figures, the first tension roller 13A and the second tension roller 13B are connected to each other by a belt, and by driving the belt with a motor, the first tension roller 13A and the second tension roller 13B rotate in synchronization.

In this configuration, both the first tension roller 13A and the second tension roller 13B serve as drive rollers. Thus, slippage between the tension rollers and the coil wire 8 is suppressed and the following does not occur: when one is a driven roller that simply rotates according to the movement of the coil wire 8, the driven roller would act as a load against the drive roller.

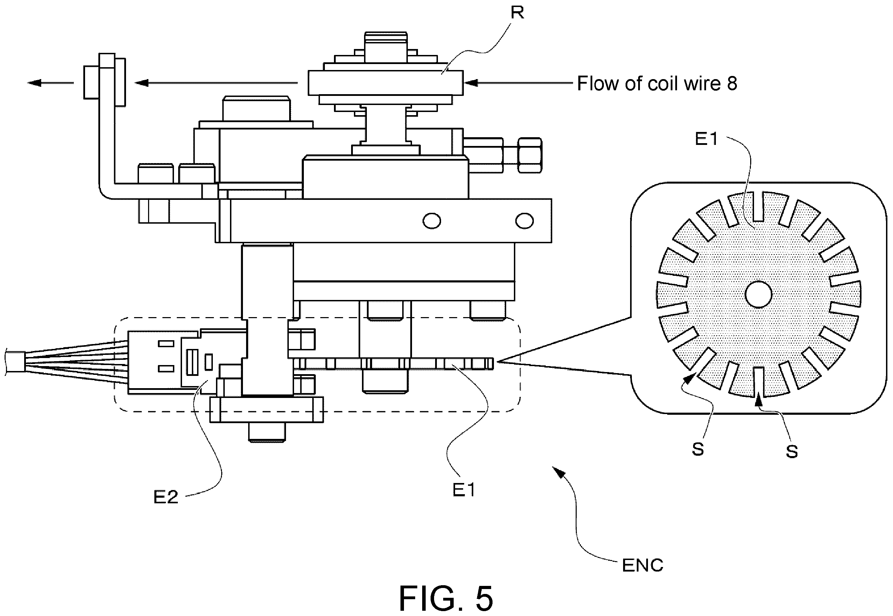

FIG. 5 is a side view showing a portion of the encoder ENC of the first embodiment related to the present invention viewed from the lateral side. The figure in the callout box in FIG. 5 is a plan view showing only a rotating plate E1. In addition, FIG. 5 omits illustration of a unit that calculates the supply length of the supplied coil wire 8 based on the detection result detected by a detection part (to be described later) of the encoder ENC. However, the embodiment is not necessarily limited to providing a unit for calculation, and the control part PLC (to be described later) may also be configured to perform the calculation of obtaining the supply length of the supplied coil wire 8 based on the detection result detected by the detection part.

The encoder ENC is a measurement part that has a detection part (described later) provided between the shaping part 12 and the winding part 14 (more specifically, the tension adjustment part 13) and measures the supply length of the supplied coil wire 8. As will be described later, it is important to be able to perform accurate measurements to determine a timing for taking as the start-finish ends.

Depending on the structure of the encoder, the load of the detection mechanism may be large, it may become difficult for the roller R to rotate due to this load, and slippage between the roller R and the coil wire 8 may occur, making detection unstable. As a result, the accuracy of the supply length of the supplied coil wire 8 obtained based on this detection result deteriorates.

Thus, as shown in FIG. 5, as the detection part, the encoder ENC of this embodiment includes a pair of rollers R that rotate in contact with the coil wire 8, a rotating plate E1 that has slits S at equal intervals in the circumferential direction and is provided at the rotation shaft of one of the rollers R, and an optical sensor E2 (an example of a passage sensor of the present invention) that detects passage of the slits S of the rotating plate E1 without contact. The rotating plate E1 and the optical sensor E2 constituting the detection mechanism (refer to the dotted line enclosure in FIG. 5) are configured in a non-contact manner to significantly reduce frictional resistance.

Thus, the roller R on which the rotating plate E1 is provided rotates easily, and as a result, slippage between the roller R and the coil wire 8 is suppressed, so stable measurement of the supply length becomes possible.

This structure detects the rotation state (rotational frequency) of the roller R according to the passage of the slits S, and obtains the length of the coil wire 8 that has passed through based on the rotational frequency of the roller R and the circumferential length (length of circumference) of the contact portion of the roller R contacting the coil wire 8, to measure the length of the supplied coil wire 8.

The winding part 14 includes a rotation mechanism (not shown) that winds the coil wire 8 supplied to the split core 7 by rotating while holding the split core 7 and the start end of the coil wire 8. Thus, the start end held by the rotation mechanism is not wound on the split core 7, and thereafter, the coil wire 8 in a rectangular shape supplied in accordance with the rotation is wound on the split core 7.

In addition, the winding part 14 includes a servo motor (not shown) for rotating the rotation mechanism, and a cutting part (not shown) that cuts the start-finish end portion to separate into a start end portion and a finish end portion.

In this embodiment, the control part PLC (to be described later) is configured to receive an output signal related to the rotational frequency from the servo motor (not shown) (refer to an arrow DT1 in FIG. 3), and the control part PLC is capable of learning about a rotation count of the split core 7 (i.e., winding count of the coil wire 8).

However, an encoder detecting the rotation count of the rotation mechanism (not shown) may also be separately provided, and the control part PLC may acquire the detection result of this encoder to learn about the rotation count of the split core 7.

The control part PLC is a so-called sequencer that includes: a storage part (not shown) storing programs for performing control actions, received data, and results of calculations based on the received data; a central processing unit (not shown) performing calculations; and a touch panel type display part (not shown) on which a setting input and the like may be performed. However, the control part PLC is not necessarily limited to a sequencer, and may also be a PC or the like.

Then, according to a touch operation of the display part by an operator, a predetermined winding count of the split core 7 at which measurement of the supply length is started is inputted as a predetermined count.

In addition, according to a touch operation of the display part by the operator, an input of a predetermined length is performed to instruct at what length of the supplied coil wire 8 the start-finish end is to be formed further after performing winding of the coil wire 8 for the predetermined count on the split core 7. In this state, winding of the winding device is started.

In the case of repeatedly performing the work of winding the coil wire 8 on split cores 7 of the same design, this input is a work that may be performed only once at the beginning.

As an example to make it easier to understand, assume that, for example, the coil wire 8 is wound for 32 turns on the split core 7 to complete the winding, and the inputted predetermined count and predetermined length are respectively 20 turns and 4 m. Note that the example provided above is merely an example to make the description easier to understand.

Upon start of winding of the coil wire 8 on the split core 7, the control part PLC monitors how many turns the split core 7 has rotated, i.e., the winding count of the split core 7, based on the output signal related to the rotational frequency from the servo motor (not shown).

With the winding count of the split core 7 reaching the inputted predetermined count of 20 turns, the control part PLC issues a command to start measurement of the supply length of the coil wire 8 supplied to the encoder ENC.

As a result, the encoder ENC starts measurement of the supply length and sequentially transmits (refer to an arrow DT2 in FIG. 3) the measurement results of the measured supply length to the control part PLC, and the control part PLC monitors the transmitted supply length.

With the supply length reaching the inputted predetermined length of 4 m, the control part PLC issues a command (refer to a dotted arrow CM in FIG. 3) for causing the shaping part 12 to execute a start-finish end processing of not performing shaping.

In other words, the start-finish end processing is performed when the supply length of the coil wire 8 supplied after performing winding of 20 turns (predetermined count) on the split core 7 reaches 4 m (predetermined length).

In response to receiving the command to execute the start-finish end processing, the shaping part 12 drives the drive mechanism (not shown) to widen the separation distance between the upper roller and the lower roller and the separation distance between the left roller and the right roller, to allow the coil wire 8 in a round shape to pass through directly without being shaped.

In this manner, the shaping part 12 performs the start-finish end processing of not performing shaping on the portion of the coil wire 8 corresponding to the start-finish end of the split core 7.

In addition, the control part PLC continues to monitor the supply length even after issuing the command to execute the start-finish end processing. After issuing the command for the start-finish end processing and when the coil wire 8 has been supplied for the length of the start-finish end portion, the control part PLC issues a command (refer to the dotted arrow CM in FIG. 3) to cause the shaping part 12 to execute the shaping processing of performing shaping.

In response to receiving the command to execute the shaping processing, the shaping part 12 drives the drive mechanism (not shown) to narrow the separation distance between the upper roller and the lower roller and the separation distance between the left roller and the right roller, to shape the coil wire 8 in a round shape into a rectangular shape.

In this manner, the shaping part 12 performs the shaping processing of performing shaping on the coil wire 8 corresponding to the portion to be wound on the split core 7. When winding is completed and stops, it generally stops in the state in which the shaping processing is being performed. Thus, at the start of winding next time, it starts from this state in which the shaping processing is being performed.

Then, with the rotation count (winding count) of the split core 7 reaching 32 turns, the control part PLC sends a command of winding end to the winding part 14. The winding part 14 receiving this command ends the rotation and performs a cutting processing of activating the cutting part (not shown) to cut the start-finish end portion into a start end portion and a finish end portion.

Conventionally, a split core 7 close to the design center is used to actually perform winding, data collection of measuring the supply length for executing the start-finish end processing is performed from start of winding, and the start-finish end processing is executed when reaching the supply length, for which data is collected from start of winding.

In that case, for example, upon winding the coil wire 8 on a split core that has a larger or smaller outer shape, within the range of manufacturing tolerance, than the split core 7 for which data collection has been performed, the start-finish end portion becomes as follows. For example, assuming that the split core 7 has a larger outer shape within the range of manufacturing tolerance, and Z mm longer is wound upon winding of one turn, then upon winding of 32 turns, the coil wire 8 will be wound 32 × Z mm longer.

In other words, the start-finish end portion will be wound into the split core 7 by 32 × Z mm, and as a result, the coil wire 8 in a rectangular shape formed following the start-finish end portion will be located at a position at which the start-finish end portion is originally intended to be located.

In contrast, as in this embodiment, if measurement of the supply length is not performed until a certain winding count is reached, and the measurement is started when the winding count reaches a predetermined count, for example, in the above example, with the predetermined count being 20 turns, the remaining count is 12 turns, so the error that occurs is limited to 12 × Z mm, and it becomes possible to locate the start-finish end portion at a more appropriate position.

In this manner, the winding method using the winding device 10 of this embodiment includes: a start-finish end step of keeping, in a round shape, a portion of a coil wire 8 corresponding to a start-finish end of a split core 7 without performing shaping; and a shaping step of performing shaping on the coil wire 8 corresponding to a portion to be wound on the split core 7 into a rectangular shape. The start-finish end step is performed when a supply length of the coil wire 8 supplied after performing winding for a predetermined count on the split core 7 reaches a predetermined length. By configuring the above winding method, it is possible to be less susceptible to the influence of variations in manufacturing tolerances of the split core 7, and as a result, the formation position of the start-finish end portion can be located at an appropriate position.

The predetermined count may be determined in consideration of the length of a pass line from the shaping part 12 to the split core 7, in a range where the length of the coil wire 8 to be wound by the remaining winding count is longer than the length of the pass line. This is because, by doing so, there is no problem in issuing the command of the start-finish end processing after performing winding for the predetermined count.

In addition, the predetermined length may be theoretically obtained according to about what length should be supplied after performing winding for the predetermined count before issuing the command of the start-finish end processing. Alternatively, as mentioned earlier, the predetermined length may also be obtained by a method of actually performing winding to collect data using a split core 7 that is close to the design center.

### (Second embodiment)

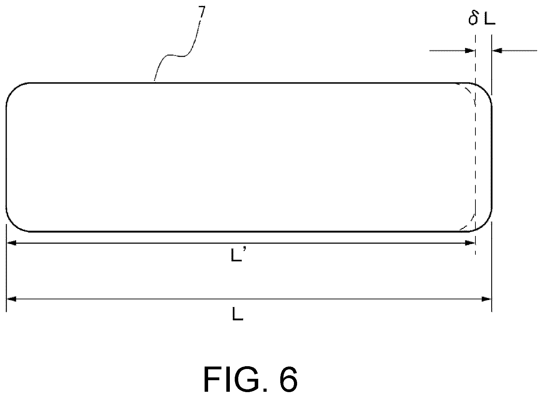

Next, a winding device 10 of a second embodiment related to the present invention will be described with reference to FIG. 6. In the second embodiment, the basic configuration is also similar to that of the first embodiment, so descriptions for points similar to the first embodiment may be omitted.

In the second embodiment, the difference from the first embodiment mainly lies in that the control part PLC functions as a length correction part that corrects the predetermined length based on shape variations of the split core 7 (winding target), and the winding device 10 includes the length correction part that corrects the predetermined length based on shape variations of the split core 7 (winding target).

FIG. 6 is a view describing the content of the correction performed by the length correction part of the second embodiment related to the present invention. Specifically, FIG. 6 is a plan view showing the shape of a body part of the split core 7 on which the coil wire 8 is wound.

In addition, FIG. 6 also shows a split core 7 serving as reference, which is a split core 7 close to the design center for which data collection is performed as described in the first embodiment. Specifically, the short side positions on the left are aligned, and the end side position on the right of the split core 7 serving as reference is indicated by a dotted line.

As shown in FIG. 6, although the split core 7 has curved surfaces formed at four corners, the split core 7 basically has a shape close to a rectangle, and the length of the long side is indicated as L.

The portion corresponding to this long side will be wound longer when winding the coil wire 8.

Thus, before performing winding, the length L of the split core 7 is measured, the difference from a long side length L' of the split core 7 serving as reference is obtained, and this difference in length is used to correct the predetermined length described in the first embodiment.

Specifically, the winding device 10 further includes a length measuring instrument (not shown) measuring the length L of the split core 7, and the length measuring instrument transmits the measured length L to the control part PLC.

Then, the control part PLC receiving the length L obtains a value δL (= L - L') by subtracting the long side length L' of the split core 7 serving as reference from the measured length L, and determines how much deviation in length will occur in the remaining winding count after the predetermined count.

Specifically, since there are two long sides, a deviation in length of 2 × δL occurs in winding of one turn. In the example of the first embodiment, since the remaining winding count is 12 turns, this deviation occurs 12 times during the winding of 12 turns. Thus, a deviation in length of 12 × 2 × δL occurs in the remaining winding count after the predetermined count.

Thus, the control part PLC functions as a length correction part also including the calculation of obtaining the deviation in length, and corrects the predetermined length by adding the obtained deviation in length to the predetermined length. In the case where L > L', since the deviation occurs in a direction in which the required length of the coil wire 8 necessary for winding becomes longer, the correction can be performed by adding to the predetermined length as described above.

In addition, in the converse case, i.e., the case where L < L', the required length of the coil wire 8 necessary for winding becomes shorter. In that case, since the calculation result of the value δL will be a negative value, the correction can still be performed by adding to the predetermined length as described above.

Then, the start-finish end processing described earlier in the first embodiment is performed when the supply length of the supplied coil wire 8 reaches the predetermined length corrected by the length correction part.

As described above, since the control part PLC functioning as the length correction part performs correction of the predetermined length based on the shape variation of the split core 7, it is possible to further reduce the influence of variations in the outer shape due to manufacturing tolerances of the split core 7.

Obviously, in the second embodiment, since measurement can be easily performed, the length of the long side is measured and used for correction. However, the circumferential length may also be measured and used for correction.

Although the present invention has been described above based on specific embodiments, the present invention is not limited to the above embodiments.

For example, although the tension adjustment part 13 has been shown using two tension rollers, three or more tension rollers may also be provided. In that case as well, all tension rollers are preferably configured as drive rollers driving synchronously.

As such, contents that can be understood from the embodiments and modifications and improvements made to the embodiments are included in the technical scope of the present invention, which is clear to those skilled in the art from the description in the claims.

### [Reference Signs List]

1: brushless motor, 2: stator, 3: rotor, 4: stator core, 5: insulator, 6: coil, 7: split core, 8: coil wire, 8A, 8B: portion, 10: winding device, 11: wire supply part, 12: shaping part, 12A: first shaping part, 12B: second shaping part, 13: tension adjustment part, 13A: first tension roller, 13B: second tension roller, 14: winding part, E1:rotating plate, E2: optical sensor, ENC: encoder, L: length, NZ: nozzle, PLC: control part, R: roller, S: slit

## Claims

1. A winding device (10) winding a wire on a winding target, the winding device (10) comprising:
a wire supply part (11) that supplies the wire in a round shape;
a shaping part (12) that is provided on a downstream side of the wire supply part (11) and shapes the wire into a rectangular shape; and
a winding part (14) that is provided on a downstream side of the shaping part (12) and winds the wire on the winding target, wherein
the shaping part (12) performs:
a start-finish end processing of not performing shaping on a portion of the wire corresponding to a start-finish end of the winding target; and
a shaping processing of performing shaping on the wire corresponding to a portion to be wound on the winding target, and
the start-finish end processing is performed when a supply length of the wire supplied after performing the winding for a predetermined count on the winding target reaches a predetermined length.

2. The winding device (10) as claimed in claim 1, wherein
the winding device (10) comprises a supply length measurement part (ENC) that has a detection part provided between the shaping part (12) and the winding part (14) and measures the supply length of the supplied wire.

3. The winding device (10) as claimed in claim 2, wherein
the detection part comprises:
a roller (R) that rotates in contact with the wire;
a rotating plate (E1) that has slits at equal intervals in a circumferential direction and is provided on a rotation shaft of the roller (R); and
a passage sensor (E2) that detects passage of the slits of the rotating plate (E1) in a non-contact manner.

4. The winding device (10) as claimed in any one of claims 1 to 3, wherein
the winding device (10) comprises a length correction part (PLC) that corrects the predetermined length based on shape variations of the winding target, and
the start-finish end processing is performed when the supply length of the supplied wire reaches a predetermined length corrected by the length correction part (PLC).

5. A winding method of winding a wire on a winding target, the winding method comprising:
a start-finish end step of keeping, in a round shape, a portion of the wire corresponding to a start-finish end of the winding target without performing shaping; and
a shaping step of performing shaping on the wire corresponding to a portion to be wound on the winding target into a rectangular shape, wherein
the start-finish end step is performed when a supply length of the wire supplied after performing winding for a predetermined count on the winding target reaches a predetermined length.
